# EUROPEAN PATENT SPECIFICATION

(11) **EP 1 819 870 B1**
(45) Date of publication and mention of the grant of the patent: **11.01.2012**
(21) Application number: 05818008.4
(22) Date of filing: 26.11.2005
(51) Int. Cl.: D06M 15/568, D06M 15/572, D06M 15/507, B60R 21/16

(54) **METHOD FOR IMPROVING ARAMID YARN BUNDLES COHESIVENESS**
VERFAHREN ZUR VERBESSERUNG DER KOHÄSION VON ARAMIDFADENBÜNDELN
PROCÉDÉ POUR AUGMENTER LA COHÉSION DE FAISCEAUX DE FILS D'ARAMIDE

(30) Priority: 01.12.2004 EP 04028395
(43) Date of publication of application: 22.08.2007
(73) Proprietor: Teijin Aramid B.V., 6824 BM Arnhem (NL)
(72) Inventor: WILLEMSEN, Stephanus, NL-6991 Tw Rheden (NL); PETERS, Martinus, NL-6521 KK Nijmegen (NL); JANSSEN, Johannes, NL-6598 CM Heijen (NL)
(74) Representative: Heimann, Anette
(86) International application number: PCT/EP2005/012664
(87) International publication number: WO 2006/058676

(56) References cited:
- EP-A- 0 358 023
- EP-A- 0 416 486
- US-A- 4 455 341
- US-A- 5 107 069
- US-A- 5 674 615

## Description

The invention relates to a method for improving bundle cohesiveness of a bundle of aramid yarn, to a method for knitting, sewing, or braiding said bundles of aramid yarn, and to knitted tubes comprising said bundles for automotive applications.

Aramid cords of spun yarns or stretch broken yarns are frequently used as reinforcing materials in rubber, thermoplastic materials or thermosets. The aramid cord consists of two or more twisted spun yarns or stretch broken yarns which are plied into a cord. The cord is used as such or after being processed on suitable equipment as a knitting, a braiding or a fabric. The processing of such aramid cords on machines, however, is problematic and often leads to breakages or repeated stops of the knitting, braiding, sewing machine, or weaving loom, which is used: Furthermore, during processing such aramid cords easily lose filaments and polymer parts easily fall out of the individual yarns and form deposits on and in machine parts. Particularly, the blocking of needles used for knitting or sewing leads to irregularities in the final form of the reinforcement. As a result of these irregularities the cord reinforcement fails in the matrix and the lifetime of the reinforcing material is reduced drastically.
Bundles of aramid fiber have been treated with various components. For instance in JP 10158939 a bundle of multifilament yarn, including aramid, is treated with an oil to prevent fluffing during finishing processes. In JP 09041274 a bundle of aramid fibers is treated with a water-soluble polyester to improve bundling power, but the materials are used for completely different application, i.e. reinforcing materials for cement materials.

When bundles of aramid yarn are used for knitting, braiding, and sewing, the known bundles have the above-mentioned disadvantages. Suitable aramid yarns (fibers) are not known for such purpose. It is therefore an object of the present invention to provide a bundle of aramid yarns, having excellent bundle cohesiveness and at the same time a low friction coefficient to allow easy knitting, braiding, and sewing. The term "bundle of aramid yarn" includes a bundle of at least two individual yarns, particularly cords made of aramid yarns.

In US 4455341 a multifilament yarn of an aromatic polyamide, in particular poly-p-phenylene terephthalamide, was provided with a water-soluble size. In addition to the size the yarn may be provided with a non-ionic wax. The sized yarn is used as warp and weft yarn in the weaving industry. It was now found (see example 3) that the friction of thus non-ionic wax treated yarn is still too high to make these yarns optimally suitable for use in cord knitting machines. Therefore there is still a need in obtaining yarns with a low coefficient of friction and at the same time having good bundle cohesiveness.

A method was now found that satisfies these requirements. To this end the invention pertains to a method for improving bundle cohesiveness of a bundle of aramid yarn and decreasing its friction coefficient, comprising adding to the bundle of yarns 0.1 - 3.0 wt.%, based on the yarn weight, of a water-soluble or water-dispersible film forming binding agent, followed by treating the bundle of yarns with an oil having an intrinsic viscosity less than 100 mm²/s (at 25°C).

Bundles of aramid yarns, such as cords, according to the invention are treated with a film forming binding agent and an overlay finish. The binding agent improves the interfilament and yarn cohesion and should be a film-forming polymer. Preferably the binding agent is a water-soluble or water-dispersible polyurethane and/or sulfonated polyester resin.
Examples of suitable polyesters are polymers derived from a sulfonated dicarboxylic acid, a dicarboxylic acid and a diol. Preferred is polyester derived from dimethyl sodium sulfo-isophthalic acid, isophthalic acid and ethylene glycol. Such a product is available under the trade name Eastman® LB-100.
Examples of suitable polyurethanes are polyether-polyurethane or polyester-polyurethane dispersions, available under the trade names Alberdingk® U400N and Impranil® DLF, respectively.
The overlay finish is an oil with low intrinsic viscosity, which reduces the yarn to metal friction of the cord. Preferably the overlay finish is an ester oil. These cord characteristics result in failure-free knitting, sewing, or braiding behavior.

Examples of suitable oils are 2-ethyl hexyl stearate, 2-ethyl hexyl palmitate, n-butyl laurate, n-octyl caprilate, butyl stearate or mixtures thereof. A preferred ester oil is a mixture of 2-ethyl hexyl stearate and 2-ethyl hexyl palmitate, which is available under the trade name LW® 245.

The use of the above sizing as such is known from US 4,455,341. However, this patent relates to sizing of individual fibers for improving the cohesiveness of the filaments in the fiber, rather than applying the sizing to a bundle of yarns to improve the cohesiveness of the individual yarns rather than the filaments. Moreover, this patent requires the use of a non-ionic wax, which use would be detrimental when using the bundle of yarns in a knitting device.

The bundle of yarns that can be treated according to the present method include any aramid yarn, including spun yarn and stretch broken yarn. Stretch broken (also known as spunnized yarn) is particularly suitable for use in the instant method. Suitable aramids include the meta- and para-aramid yarns, such as Teijinconex® yarns [poly-(meta-phenylene isophthalamide); MPIA], Twaron® yarns [poly(para-phenyleneterephthalamide); PPTA] and Technora® yarns [co-poly-(paraphenylene/3,4'-oxydiphenylene terephthalamide)].

Finally, the invention has also to its objective to provide a method for knitting, sewing, or braiding bundles of aramid yarn comprising the use of a bundle of yarns to which has been added 0.1 - 3.0 wt.%, based on the yarn weight, of a water-soluble or water-dispersible film forming binding agent, and thereafter an oil having an intrinsic viscosity less than 100 mm²/s.

The yarns that are treated according to the method of the invention shown strong cohesion properties, i.e. the cord containing these yarns has a low tendency to split into individual yarns. Further the bundle (cord) is shown to have improved friction properties. The bundles of yarns of the invention therefore are suitable for use in methods for knitting, sewing, or braiding, and for making knitted tubes for use in automotive applications.

The invention is further explained and the advantages are shown in the following non-restrictive illustrative examples.

### Determination of the (yarn-to-metal) friction coefficient (f)

For the determination of the friction coefficient of the cord, the cord was guided from the bobbin over a magnetic tension device. Then it passed a tension measuring head (pretension T1), a friction pin (angle of wrap 90°), a second tension measuring head (aftertension T2) and a godet. Finally the cord was wound. During the determination the aftertension (T2) was measured. The friction coefficient was calculated under the conditions as follows:

| | |
|---|---|
| Conditions climate room | : 20° C/65% RH |
| Cord/godet speed | : 50 m/min |
| Pretension (T1) | : 50 cN fixed by means of a magnetic tension device |
| Friction pin | : smooth chromium plated steel |
| Friction pin diameter | : 32 mm |

Calculation friction coefficient (f): f = 1/α * In (T2/T1)
wherein α = angle of wrap in radians (½ π)

### The cutting test

A cord sample of 100 cm long is vertically suspended over a table. Its top end is secured in a clamp. To the free, lower end of the sample there is attached such a weight that the tension in the cord is 0.15 cN/dtex. Rotation of the free hanging cord should be prevented. Subsequently, the cord is cut with a pair of scissors at 75 cm below the point of suspension. Next, of the remaining suspended three fourths of the cord sample, the length is measured of the flared newly formed end at the point where the cord was cut through. The extent to which the cord has opened longitudinally as a result of its having been cut through under the above-mentioned tension is indicative of the degree of cohesion of the yarns. The test is carried out in five-fold and the average value (cm) is the cutting test value. The test is indicative for the adhesiveness of the individual yarns in the bundle of yarns.

### Example 1 (experiments 1A - 1J, 2A - 2J, 3A - 3J, 4)

This example illustrates the application of a binding agent in combination with an overlay finish on a 3-ply cord of Teijinconex® KB. The cord was produced out of Teijinconex® KB stretch broken yarn (1100 dtex X 3Z80) and was subjected to the following treatments.
A cord package was rollingly unwound while successively passing the cord over a liquid applicator A, through a steam box (temperature 240°C, residence time 10 seconds), passing the cord over a liquid applicator B and finally wound into a package at a speed of 60 m/min.
With the liquid applicator A and a tubing pump, the cord was treated with an aqueous binding agent mentioned in Table I. With the liquid applicator B and a syringe pump, the cord was treated with the overlay finish (neat oil) mentioned in Table II.
The following process conditions were varied:
a) the composition of the binding agent
b) the dosed amount of the binding agent
c) the dosed amount of the overlay finish
The produced cords were tested on their yarn-to-metal friction and bundle cohesiveness according to the cutting test. Furthermore the mechanical characteristics and the moisture content of some cords were determined.
As a reference, untreated cord of Teijinconex® KB was tested. The results are shown in Table III.

Cords of experiment 2B and 1E showed an excellent knitting behavior on a Lucas circular knitting machine, while untreated cord (experiment 4) showed a bad knitting performance (stops and failures) on the same machine.

**Table I Aqueous polyester and polyurethane based binding agents**

| Resin composition code | a1 | a2 | a3 | b1 | b2 | b3 | c1 | c2 | c3 |
|---|---|---|---|---|---|---|---|---|---|
| Resin concentration in wt.% | 1.0 | 2.0 | 3.0 | 1.0 | 2.0 | 3.0 | 1.0 | 2.0 | 3.0 |
| | | | | | | | | | |
| Eastman LB-100 (100%) | 1.0 | 2.0 | 3.0 | | | | | | |
| Alberdingk U 400N (40%) | | | | 2.5 | 5.0 | 7.5 | | | |
| Impranil® DLF (40%) | | | | | | | 2.5 | 5.0 | 7.5 |
| Demineralized water | 99.0 | 98.0 | 97.0 | 97.5 | 95.0 | 92.5 | 97.5 | 95.0 | 92.5 |
| | | | | | | | | | |

| | | | | | | | | | |
|---|---|---|---|---|---|---|---|---|---|
| Eastman LB-100 is a water-dispersable polyester polymer, supplier Eastman Chemical Company, Kingsport, USA. Alberdingk U 400N (40%) is a polyether-polyurethane dispersion in water, supplier Alberdingk Boley GmbH, Krefeld, Germany. Impranil® DLF (40%) is a polyester-polyurethane dispersion in water, supplier Bayer AG, Leverkusen, Germany | | | | | | | | | |

**Table II Overlay finish**

| Code overlay finish | d |
|---|---|
| Concentration in wt.% | 100 |
| LW 245 | 100 |

| | |
|---|---|
| LW 245 is a low viscous esteroil (mixture of 2-ethyl hexyl stearate and 2-ethyl palmitate) with a viscosity of 14.6 mm²/sec (25°C), supplier Cognis, Düsseldorf, Germany | |

**Table III Results of example 1**

| Exp. No. | Binding agent | | Overlay finish Tret N81 | Moisture content % | Strength N | Linear density dtex | Elong. % | Coefficient of friction f | Cutting test value cm |
|---|---|---|---|---|---|---|---|---|---|
| | amount on yarn % | code | | | | | | | |
| 1A* | 0.3 | a1 | none | 4.1 | 131 | 3563 | 12.1 | 0.50 | 7.7 |
| 1B | 0.3 | a1 | 0.30% | 3.9 | | | | 0.38 | 6.5 |
| 1C | 0.3 | a1 | 0.50% | 4.0 | | | | 0.38 | 9.2 |
| 1D* | 0.6 | a2 | none | 3.7 | 139 | 3556 | 12.2 | 0.51 | 2.2 |
| 1^{E} | 0.6 | a2 | 0.30% | | | | | 0.39 | 1.9 |
| 1F | 0.6 | a2 | 0.50% | | | | | 0.39 | 1.9 |
| 1G* | 0.9 | a3 | none | 3.7 | 133 | 3632 | 12.1 | 0.52 | 1.6 |
| 1H | 0.9 | a3 | 0.30% | | | | | 0.37 | 1.2 |
| 1J | 0.9 | a3 | 0.50% | | | | | 0.36 | 1.4 |
| 2A* | 0.3 | b1 | none | 4.6 | 135 | 3486 | 12.3 | 0.50 | 4.4 |
| 2B | 0.3 | b1 | 0.30% | | | | | 0.44 | 6.1 |
| 2C | 0.3 | b1 | 0.50% | | | | | 0.43 | 5.8 |
| 2D* | 0.6 | b2 | none | 4.1 | 130 | 3526 | 12.0 | 0.50 | 1.7 |
| 2^{E} | 0.6 | b2 | 0.30% | | | | | 0.43 | 2.4 |
| 2F | 0.6 | b2 | 0.50% | | | | | 0.43 | 1.7 |
| 2G* | 0.9 | b3 | none | 3.9 | 129 | 3641 | 11.3 | 0.52 | 1.2 |
| 2H | 0.9 | b3 | 0.30% | | | | | 0.46 | 1.4 |
| 2J | 0.9 | b3 | 0.50% | | | | | 0.45 | 1.1 |
| 3A* | 0.3 | c1 | none | 3.9 | 133 | 3570 | 11.4 | 0.50 | 4.1 |
| 3B | 0.3 | c1 | 0.30% | | | | | 0.43 | 6.5 |
| 3C | 0.3 | c1 | 0.50% | | | | | 0.42 | 5.3 |
| 3D* | 0.6 | c2 | none | 3.8 | 122 | 3527 | 10.3 | 0.49 | 2.4 |
| 3E | 0.6 | c2 | 0.30% | | | | | 0.43 | 1.8 |
| 3F | 0.6 | c2 | 0.50% | | | | | 0.42 | 2.7 |
| 3G* | 0.9 | c3 | none | 3.7 | 141 | 3537 | 11.9 | 0.49 | 1.4 |
| 3H | 0.9 | c3 | 0.30% | | | | | 0.43 | 1.2 |
| 3J | 0.9 | c3 | 0.50% | | | | | 0.41 | 1.5 |
| 4* | Untreated cord TeijinCc onex KB | | | 4.0 | 135 | 3478 | 11.9 | 0.52 | 28.4 |

| | | | | | | | | | |
|---|---|---|---|---|---|---|---|---|---|
| * comparison examples | | | | | | | | | |

### Example 2 (experiments 5, 6)

A cord was produced out of Teijinconex® KB stretch broken yarn (1100 dtex X 2Z120) and was subjected to the same treatment as described for experiment 1 E earlier. As a reference, untreated cord of Teijinconex® KB was tested. The results are shown in Table IV. The cord treated according to the invention showed excellent bundle cohesion and a low friction coefficient.

**Table IV Results of experiments 5 and 6**

| Exp. No. | Binding agent | | Overlay finish Tret N81 | Moisture content % | Strength N | Linear density dtex | Elong. % | Coefficient of friction f | Cutting test value cm |
|---|---|---|---|---|---|---|---|---|---|
| | amount on yarn % | code | | | | | | | |
| 5 | 0.6 | a2 | 0.30% | 1.8 | 97 | 2352 | 12.1 | 0.35 | 0.6 |
| 6* | Untreated Teijinconex® KB cord | | | 3.7 | 96 | 2270 | 12.2 | 0.44 | 12.1 |

| | | | | | | | | | |
|---|---|---|---|---|---|---|---|---|---|
| * comparison example | | | | | | | | | |

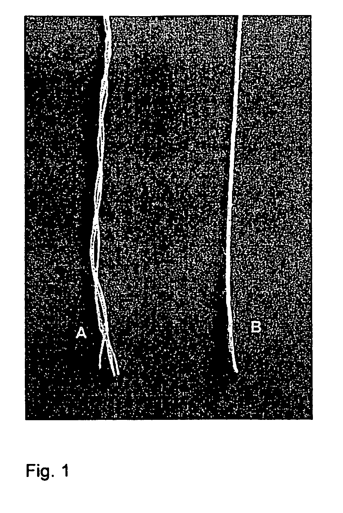

Fig. 1 is a photograph showing the effect of the method of the invention.
In the photograph an untreated (A) cord (3 x 1100 dtex) is shown in comparison with a cord (B) treated according to the invention, after the cutting test.

### Example 3

In this example the effect of an oil having an intrinsic viscosity less than 100 mm²/s at 25° C in comparison with a non-ionic wax is shown.
A cord was produced out of Teijinconex™ KB stretch broken yarn (1100 dtex X 3Z80). This cord was subjected to the following treatments. The cord package was rollingly unwound while successively passing the cord over a liquid applicator A, through a hot air oven (temperature 240° C, residence time 10 seconds), passing the cord over a liquid applicator B (in case of oil) or a heated metal kiss roll C (in case of wax) and finally wound into a package at a speed of 36 m/min. With the liquid applicator A and a tubing pump, the cord was treated with 0.6 wt.% of the binding agent Eastman LB 100 (water-dispersable polyester polymer, supplier Eastman Chemical Company, Kingsport, USA) from a 2.0 wt.% aqueous solution.
The cord was treated with oil LW 245 (viscosity of 14.6 mm²/s at 25° C) using liquid applicator B and a syringe pump.
In the comparison the cord was treated with the molten wax Bevaloid® 356 using the heated kiss roll C. Bevaloid® 356 is a non-ionic wax (supplier Kemira Chimie SA, Lauterbourg, France) and is recommended by Kemira as replacement for the non-ionic wax Sopromine® CF, which is not longer available.

The coefficient of friction (yarn-to-metal) of the treated cords was determined as explained above.

The results are shown in Table V below.

**Table V Coefficient of friction of treated Teijinconex® KB cords**

| Binding agent | Overlay finish¹ | | Coefficient of friction f |
|---|---|---|---|
| Eastman LB 100 | LW 245 (oil) | Bevaloid® 356 | |
| | | (non-ionic wax) | |
| on cord (wt.%)¹ | on cord (wt.%) | on cord (wt.%)² | |
| 0.6* | none | none | 0.36 |
| | | | |
| 0.6 | 0.5 | | 0.24 |
| 0.6 | 1.0 | | 0.24 |
| | | | |
| 0.6* | | 0.5 | 0.28 |
| 0.6* | | 1.0 | 0.31 |

| | | | |
|---|---|---|---|
| ¹ dosed amount ² to apply the correct amount of wax, first a calibration curve (wax uptake versus kiss roll speed) was made. * reference examples | | | |

It can be concluded that the lowest yarn-to-metal friction of Teijinconex® KB cord is achieved when an oil (viscosity < 100 mm²/s at 25° C) is used as an overlay finish. The use of a non-ionic wax as overlay finish is less effective and will therefore lead to earlier process stops and breakages on e.g. cord knitting machines.

## Claims

1. A method for improving bundle cohesiveness of a bundle of aramid yarn and decreasing its friction coefficient, comprising adding to the bundle of yarns 0.1 - 3.0 wt.%, based on the yarn weight, of a water-soluble or water-dispersible film forming binding agent, followed by treating the bundle of yarns with an oil having an intrinsic viscosity less than 100 mm²/s at 25° C.

2. The method according to claim 1 wherein the film forming binding agent is water-dispersible polyurethane or sulfonated polyester, or a mixture thereof.

3. The method according to claim 1 or 2 wherein the yarn is stretch broken yarn.

4. The method according to any one of claims 1 to 3 wherein the yarn is poly-(meta-phenylene isophthalamide) yarn

5. A method for knitting, sewing, or braiding bundles of aramid yarn comprising the use of a bundle of yarns to which has been added 0.1 - 3.0 wt.%, based on the yarn weight, of a water-soluble or water-dispersible film forming binding agent, and thereafter an oil having an intrinsic viscosity less than 100 mm²/s, at 25°C.

6. Knitted tubes for automotive applications comprising knitted bundles of yarn obtainable by the method of any one of claims 1-4.

## Patentansprüche

1. Verfahren zum Verbessern der Bündelkohäsion eines Bündels aus Aramidgarn und zum Verringern seines Reibungskoeffizienten, das das Zusetzen von 0,1 bis 3,0 Gew.-%, basierend auf dem Garngewicht, eines wasserlöslichen oder in Wasser dispergierbaren, filmbildenden Bindemittels zum Garnbündel und das nachfolgende Behandeln des Garnbündels mit einem Öl, das bei 25 °C eine Grenzviskosität von weniger als 100 mm²/s aufweist, umfasst.

2. Verfahren nach Anspruch 1, wobei das filmbildende Bindemittel in Wasser dispergierbares Polyurethan oder sulfonierter Polyester oder eine Mischung daraus ist.

3. Verfahren nach Anspruch 1 oder 2, wobei das Garn ein streckgebrochenes Garn ist.

4. Verfahren nach einem der Ansprüche 1 bis 3, wobei das Garn Poly(metaphenylenisophthalamid)-Garn ist.

5. Verfahren zum Wirken, Vernähen oder Flechten von Bündeln aus Aramidgarn, das die Verwendung eines Garnbündels umfasst, dem basierend auf dem Garngewicht 0,1 bis 3,0 Gew.-% eines wasserlöslichen oder in Wasser dispergierbaren, filmbildenden Bindemittels und danach ein Öl zugesetzt wurden, das bei 25 °C eine Grenzviskosität von weniger als 100 mm²/s aufweist.

6. Wirkschläuche für Automobilanwendungen, die durch das Verfahren nach einem der Ansprüche 1 bis 4 herstellbare gewirkte Garnbündel umfassen.

## Revendications

1. Procédé permettant d'améliorer la cohésion de faisceau d'un paquet de filés d'aramide et d'en réduire le coefficient de frottement, lequel procédé comporte le fait d'ajouter au paquet de filés, en une proportion de 0,1 à 3,0 % en poids rapporté au poids des filés, un agent liant filmogène soluble dans l'eau ou dispersable dans l'eau, et le fait de traiter ensuite le paquet de filés avec une huile dont la viscosité intrinsèque à 25 °C est inférieure à 100 mm²/s.

2. Procédé conforme à la revendication 1, dans lequel l'agent liant filmogène est un polyester sulfoné ou un polyuréthane, dispersable dans l'eau, ou un mélange de tels polymères.

3. Procédé conforme à la revendication 1 ou 2, dans lequel le filé est un filé craqué par étirage.

4. Procédé conforme à l'une des revendications 1 à 3, dans lequel le filé est un filé de poly(méta-phénylène isophtalamide).

5. Procédé de réalisation de tricots, de coutures ou de bordures au moyen de paquets de filés d'aramide, comportant le fait d'utiliser un paquet de filés auquel ont été ajoutés d'abord un agent liant filmogène soluble dans l'eau ou dispersable dans l'eau, en une proportion de 0,1 à 3,0 % en poids rapporté au poids des filés, et ensuite une huile dont la viscosité intrinsèque à 25 °C est inférieure à 100 mm²/s.

6. Tubes tricotés pour applications automobiles, comprenant des paquets de filés, accessibles selon un procédé conforme à l'une des revendications 1 à 4, tricotés.
